# EUROPEAN PATENT SPECIFICATION

(11) **EP 3 877 130 B1**
(45) Date of publication and mention of the grant of the patent: **04.05.2022**
(21) Application number: 19802296.4
(22) Date of filing: 06.11.2019
(51) Int. Cl.: B29B 17/02, C22B 21/00, B09B 3/00

(54) **RECYCLING OR PROCESSING OF LAYERED PACKAGING MATERIALS**
WIEDERVERWERTUNG ODER VERARBEITUNG VON GESCHICHTETEN VERPACKUNGSMATERIALIEN
RECYCLAGE OU TRAITEMENT DE MATÉRIAUX D'EMBALLAGE EN COUCHES

(30) Priority: 06.11.2018 ZA 201807422
(43) Date of publication of application: 15.09.2021
(73) Proprietor: CSIR, 0184 Brummeria (ZA)
(72) Inventor: MUSYOKA, Nicholas, 0081 Pretoria (ZA); REN, Jianwei, 0081 Pretoria (ZA)
(74) Representative: HGF
(86) International application number: PCT/IB2019/059525
(87) International publication number: WO 2020/095219

(56) References cited:
- WO-A1-2004/031274
- WO-A2-2011/077450

## Description

THIS INVENTION relates to recycling or processing of layered packaging material. In particular, the invention relates to a method of recycling or processing layered packaging material, to the use of layered packaging material in the manufacture of value-added products and to an aluminium-containing product or feedstock when produced by said method of recycling or processing layered packaging material.

Recycling or processing of polymer-based multilayer packaging materials, e.g. used multilayer packaging materials, presents an ongoing challenge worldwide. The commonly used multi-layered packaging materials that are often referred to as 'Tetra Pak' after the packaging materials and packaging produced by the company Tetra Pak are the most widely used packaging materials for perishable food products such as juices and dairy products due to their ability to extend shelf life. Conventionally, these packaging materials are produced through the process of lamination of paperboard, low density polyethylene (LDPE) and thin aluminium foil (Al) in order to form a layered composite material. These packaging materials are typically composed of 75 wt % of paperboard, 20 wt % LDPE and 5 wt % Al foil with each of these layers serving an important role for food preservation. For example, the paperboard aims to improve on the materials strength and the Al foil provides protection from light, odours and microorganisms (among others) whereas the polymeric layer(s) (most often LDPE) aims to protect the food content from getting into direct contact with the aluminium layer as well as acting as a bonding material during the hot sealing process. Due to the complexity of this layered structure, used layered packaging materials often present a recycling challenge. Therefore, their significant accumulation in municipal waste dumps requires dedicated and innovative technologies that will not only make the recycling of these packaging materials economically feasible but also ensure sustainability of the recycling process.

Broadly, the common practices for recycling packaging made from layered packaging material can be classified into two main categories i.e. 1) those relying on hydropulping as the first step to enable the separation of cellulosic fibre from Poly-AI laminate, and 2) those based on recycling the whole packaging material as it is. The second approach of non-separated recycling often involves energy recovery (either through incineration, gasification or pyrolysis) or by reforming/reprocessing the used packaging material to obtain low quality products such as laminated boards or other shaped products through hot-pressing with other binders. On the other hand, the process involving hydropulping typically results in a paper pulp that is processed into different paper-based products and a Poly-AI laminate/composite, which may be in the form of pellets.

The Poly-AI composite resulting from the hydropulping of used layered packaging material is typically composed of 20 wt % Al and 80 wt % polyethylene. Technologies for optimal and high value recycling of the Poly-AI are still under development. In most cases, the Poly-AI composite is mainly used for energy recovery either through direct incineration or through pyrolysis. The solid materials obtained from the energy recovery route are often of low value since they are mostly either Al₂O₃ or a mixture of Al metal and Al₂O₃. Alternatively, the Poly-AI composite can also be shaped into other functional materials through hot-pressing or moulding to result in items such as roof-tiles and trays, among others. There are studies that have reported on either an acid or solvent-based delamination approach to recover Al and LDPE powder. Additionally, there are reports on application of a solvent based extraction process for recovering LDPE by dissolving it in an organic solvent at elevated temperatures followed by separation of undissolved materials (Al and/or residual paper or other polymers).

WO 2004/031274 A1 relates to a method for the recovery of aluminium and polyethylene from multilayered fragments of packaging waste by treating the fragments with an inorganic base solution, such as sodium hydroxide, so as to dissolve the laminated aluminium to subsequent recoverable aluminium salts, namely sodium aluminate and polyethylene retained in its physical form. The plastic material is released from lamination. The sodium aluminate can be converted to aluminium sulphate.

WO 2011/077450 A2 relates to a method for the recovery of constituents of paper-based multilayered packaging waste by treating the packaging waste with mixture of metal salts, and separating constituents from each other. The recovered constituents comprise aluminum and plastic.

Owing to the fact that existing technologies for recycling Poly-Al composites are either too complicated or often result in low-value products that makes their recycling unattractive, there is a need to develop other approaches or technologies that can contribute in making the recycling of used layered packaging material, such as Tetra Pak-type packaging material, economically more feasible. It would be an added advantage if such a recycling technology can also produce high value-added products.

According to one aspect of the invention, there is provided a method of recycling or processing layered packaging material, the method including
admixing a polymer-metal composite obtained from or forming part of layered packaging material with a reactant selected to react with the metal of the polymer-metal composite at elevated temperatures, wherein the polymer-metal composite is a polymer-aluminium composite and wherein the reactant is a metal salt, an ammonium salt, or a metalloid-based material, selected to react with the aluminium to form an aluminium-containing compound; and
reacting the polymer-aluminium composite with the reactant at an elevated reaction temperature in the range of about 200°C to about 800°C, either at pyrolytic conditions to subject the polymer of the polymer-aluminium composite to pyrolysis, or under combustion or incineration conditions to subject the polymer of the polymer-aluminium composite and any other non-metal layer of the layered packaging material that may be present, to combustion, to form an aluminium-containing compound and burning or driving off, at said elevated reaction temperature, the polymer of the polymer-aluminium composite and any other non-metal layer material of the layered packaging material that may be present.

The layered packaging material is typically used layered packaging material or layered packaging material that is to be reprocessed or reworked. The layered packaging material typically includes at least three layers, including a cellulose-based or wood pulp-based layer, e.g. a paperboard layer, an aluminium or aluminium foil layer and a layer or film of a synthetic plastics or polymeric material.

The synthetic plastics or polymeric material may be one or more of low or high density polyethylene, polypropylene, polyamide, polyethylene terephthalate, polyvinyl chloride and polystyrene. Typically, at least one layer is of polyethylene.

In one embodiment of the invention, the layered packaging material includes at least a paperboard layer, an aluminium foil layer and one or more polyethylene layers or films. Typical examples of such layered packaging material are the multi-layered packaging materials produced by Tetra Pak, part of the Tetra Laval Group headquartered in Switzerland.

The metal of the metal salt may be Na, K, Ca, Mg or other alkali and alkaline-earth metals.

The ammonium salt may for example be ammonium sulphate, carbonate or nitrate.

The metalloid-based material may be aboron-containing oxyanion.

The reactant may be in the form of a hydroxide, a carbonate, a chloride, a nitrate, a phosphate, an oxalate or a sulphate.

In one embodiment of the invention, the reactant is a sodium salt, e.g. NaOH, Na₂C0₃, Na₂SO₄, NaCl. The aluminium-containing compound formed at the elevated reaction temperature may thus be sodium aluminate.

The reaction temperature of the thermo-chemical method of the invention may be in the range of about 300°C to about 700°C, or in the range of about 400°C to about 650°C, e.g. about 550°C.

The polymer-aluminium composite and the reactant may be admixed in a ratio of from about 1:1 to about 8:1, or in the ratio of from about 2:1 to about 6:1, or in the ratio of from about 3:1 to about 5:1, e.g. about 1:1 or about 2:1 or about 3:1 or about 4:1, on a mass basis.

Admixing of the polymer-aluminium composite and the reactant may be by means of physical agitation. Instead, admixing of the polymer-aluminium composite and the reactant may be heat-induced.

The method may include hydropulping the layered packaging material to provide the polymer-aluminium composite, with said polymer-aluminium composite thus being substantially free of paperboard or other cellulose-based or wood pulp-based layer material.

Instead, the polymer-aluminium composite may include paperboard or other cellulose-based or wood pulp-based layer material, with the polymer-aluminium composite thus forming part of used layered packaging material or layered packaging material that is being reprocessed and that was not subjected to hydropulping.

Preferably, the polymer-aluminium composite is in particulate form, e.g. in the form of pellets of the polymer-aluminium composite or in the form of comminuted or shredded layered packaging material, e.g. comminuted or shredded used layered packaging material. It is however to be appreciated that the method of the invention can be used with whole packaging made from layered packaging material as hereinbefore described.

The method may include withdrawing a gaseous stream driven off at the elevated reaction temperature, said gaseous stream including the polymer of the polymer-aluminium composite or one or more compounds formed at elevated temperature from the polymer of the polymer-aluminium composite. The method may include combusting the withdrawn gaseous stream to provide heat for the reaction between the polymer-aluminium composite and the reactant.

The method may include converting the sodium aluminate to aluminium sulphate. Typically, this conversion includes reacting the sodium aluminate with water to form aluminium hydroxide and reacting the aluminium hydroxide with sulphuric acid to form aluminium sulphate. Aluminium sulphate is useful in the treatment of water.

The method may include converting the aluminium sulphate to a metal organic framework (MOF) through the addition of an organic linker. The organic linker may be fumaric acid to produce an Al-fumarate metal organic framework. MOFs are a new class of porous materials that are reported to have many industrial and commercial applications.

The method may include converting the sodium aluminate to a zeolite by reacting the sodium aluminate with a source of silicon in a basic aqueous solution. In one embodiment of the invention, the source of silicon is fly ash.

Also disclosed is the use of layered packaging material that includes aluminium in the manufacture of aluminium sulphate or aluminium hydroxide.

The invention also extends to use of layered packaging material which includes aluminium in the manufacture of a zeolite using a process as hereinbefore described.

The invention further extends to use of layered packaging material that includes aluminium in the manufacture of an Al-containing metal organic framework, using a process as hereinbefore described.

The layered packaging material may be as hereinbefore described.

The zeolite may be zeolite A.

Also disclosed is an aluminium-containing product or feedstock when produced by a method as hereinbefore described.

The aluminium-containing product or feedstock may be selected from the group consisting of sodium aluminate, aluminium sulphate, aluminium hydroxide, a zeolite and an aluminium-containing metal organic framework.

The invention is now described with reference to the following non-limiting laboratory examples and the accompanying drawings, in which
Figure 1 shows pictures of whole/unprocessed multi-layered packaging material and Poly-AI pellets;
Figure 2 shows pictures of Al containing pharmaceutical multi-layered packaging materials (blisters and strips);

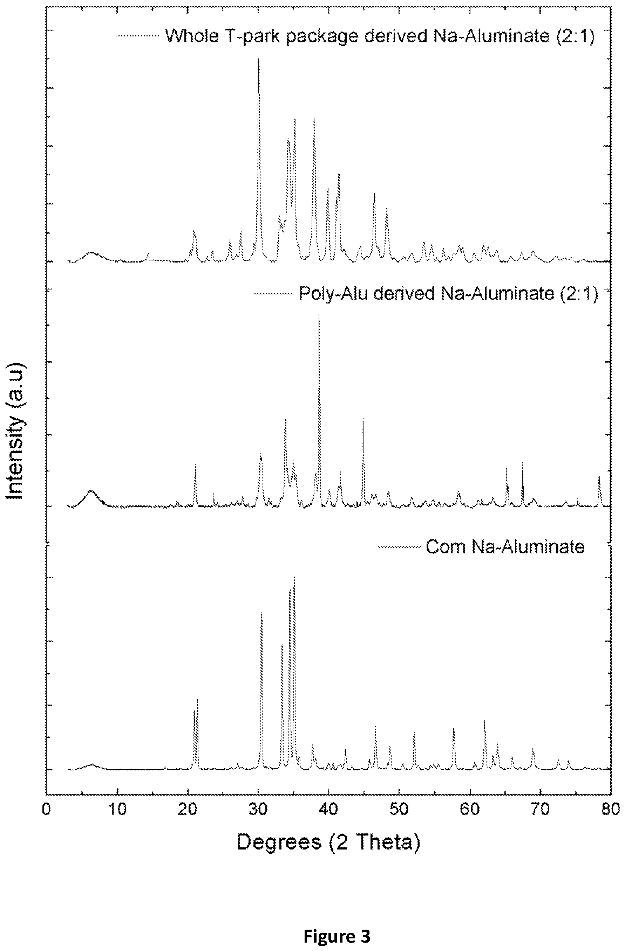

Figure 3 shows comparative XRD patterns of commercial sodium aluminate, whole/unprocessed multi-layered packaging material derived sodium aluminate and Poly-AI derived sodium aluminate obtained using the method of the invention;

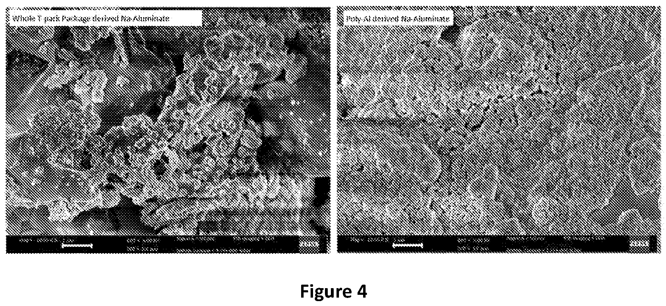

Figure 4 shows comparative SEM images of sodium aluminate resulting from whole/unprocessed multi-layered packaging material and Poly-AI pellets using the method of the invention;

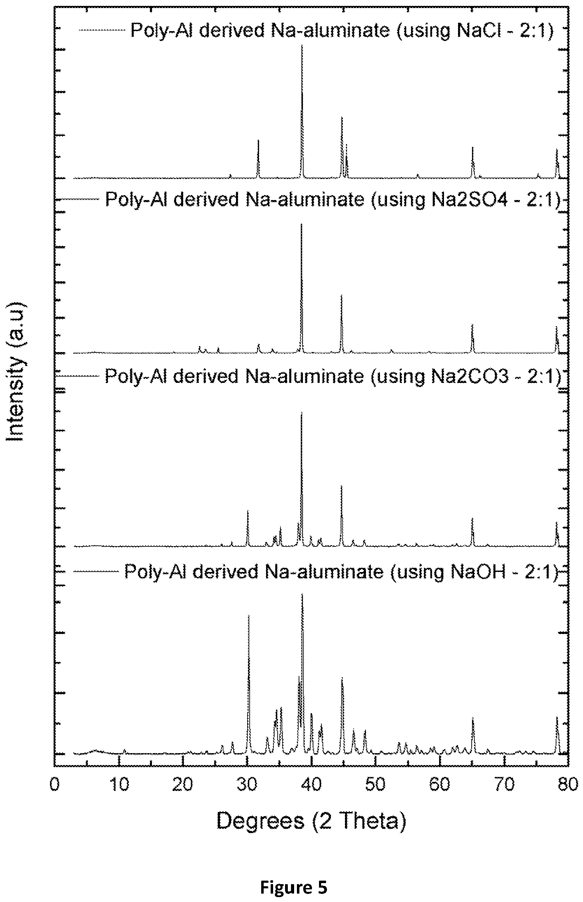

Figure 5 shows comparative XRD patterns of sodium aluminate obtained from Poly-AI with the use of different sodium salts (NaOH, Na₂C0₃, Na₂SO₄ and NaCl) using the method of the invention;

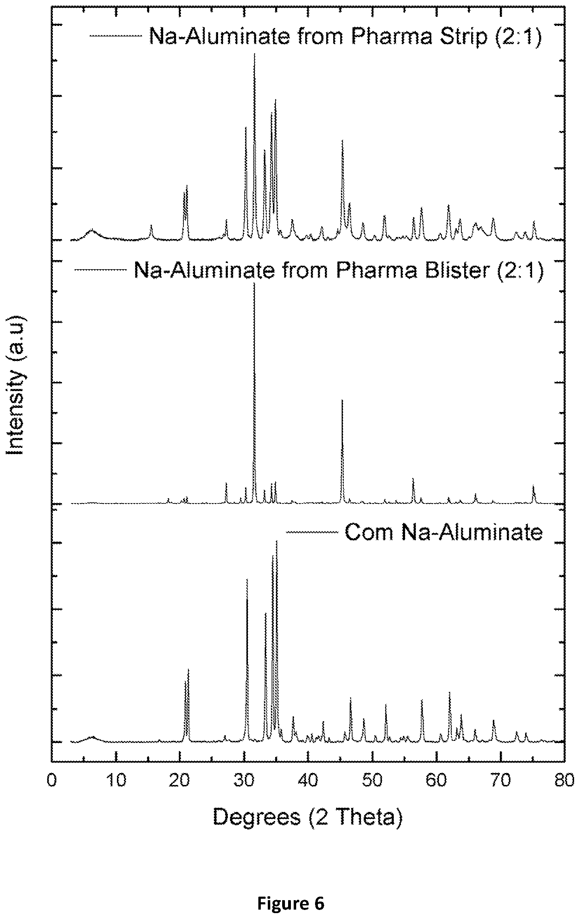

Figure 6 shows comparative XRD patterns of sodium aluminate obtained from pharmaceutical multi-layered packaging materials (blisters and strips) using the method of the invention;
Figure 7 shows XRD patterns of commercial aluminium sulphate and Poly-AI derived aluminium sulphate obtained using the method of the invention;
Figure 8 shows TGA plots for Poly-Al composite together with Al-hydroxide and Al-sulphate derivatives obtained using the method of the invention;
Figure 9 shows XRD patterns of zeolite A derived from commercial Na-aluminate and from Poly-AI derived Na-aluminate obtained using the method of the invention;
Figure 10 shows SEM images of zeolite A derived from commercial Na-aluminate and from Poly-AI derived Na-aluminate obtained using the method of the invention;
Figure 11 shows XRD patterns of Al-Fum MOF derived from commercial Al-sulphate and from Poly-Al derived Al-sulphate obtained using the method of the invention; and
Figure 12 shows SEM images of Al-Fum MOF derived from commercial Al-sulphate and from Poly-AI derived Al-sulphate obtained using the method of the invention.

### Example 1

### Method for obtaining aluminium-based hydroxide and sulphate.

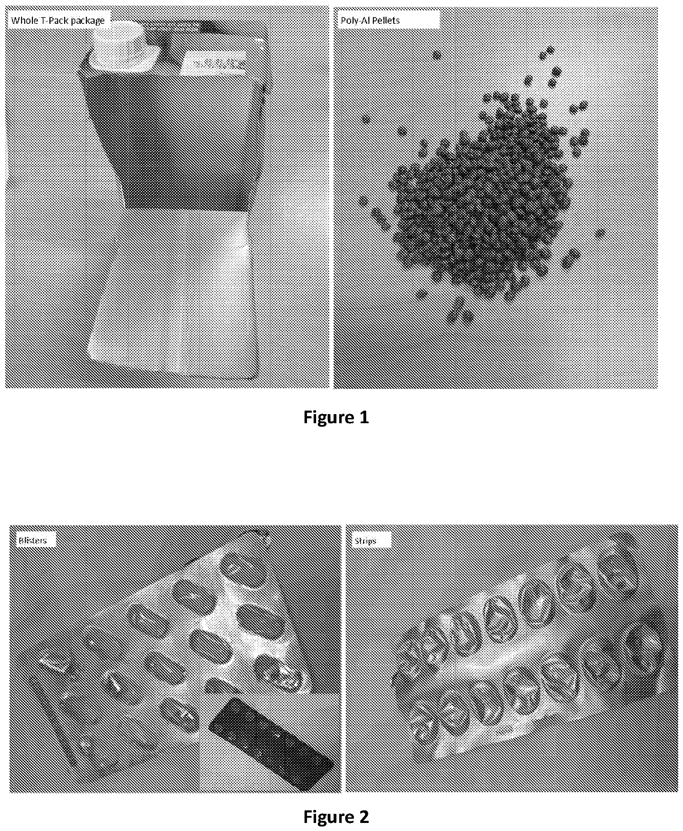

Poly-AI pellets obtained from the hydropulping of Tetra Pak (trade name) layered packaging material were thoroughly mixed with NaOH powder in different ratios (i.e. Poly-Al: NaOH ratio was 1:1, 2:1, 3:1, 4:1) and transferred into a crucible that was inserted in a muffle furnace. The mixture was heated up to 550°C and held at the same temperature for 1.5 hours. The XRD pattern for the resulting Na-aluminate powder is shown in Figure 1 and is also compared with those of commercial Na-aluminate powder. The obtained patterns were closely similar but with some peak shifts and splitting which could be due to subtle crystallographic or compositional differences.

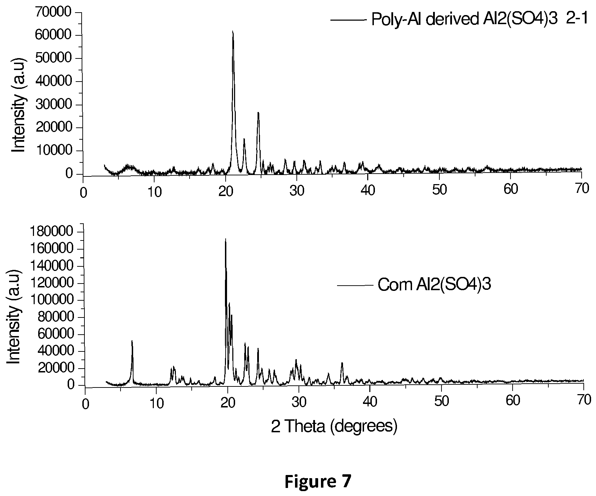

In order to transform the obtained Poly-Al derived Na-aluminate to Al-based hydroxide and sulphate, water was firstly added to the Na-aluminate in order to recover Al-hydroxide. Sulphuric acid was thereafter stoichiometrically added to the recovered Al-hydroxide to obtained Na-sulphate. Figure 7 shows XRD pattern of the recovered Poly-Al derived aluminium sulphate and also compares it with an XRD pattern for aluminium sulphate obtained commercially.

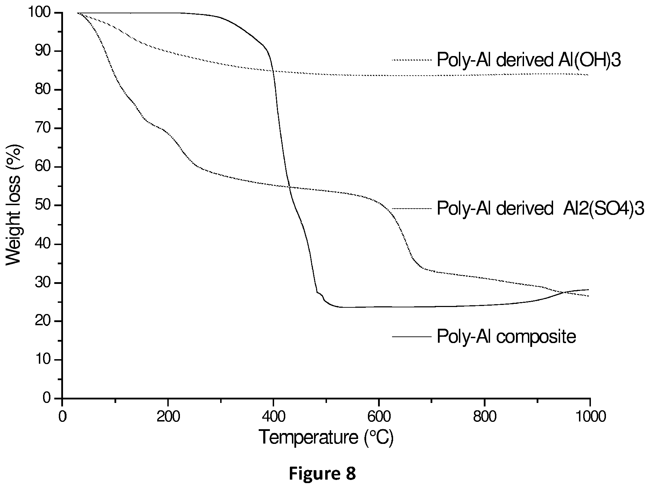

TGA plots for the Poly-Al composite, derived Al-hydroxide and derived Al-sulphate are shown in Figure 8. The expected ^{~}20 wt % of Al content in the Poly-Al composite is confirmed from the TGA whereas the derived Al-based hydroxide and sulphate are also in agreement with expectations.

### Example 2

### Synthesis of zeolite A from coal fly ash and Poly-AI derived Na-aluminate

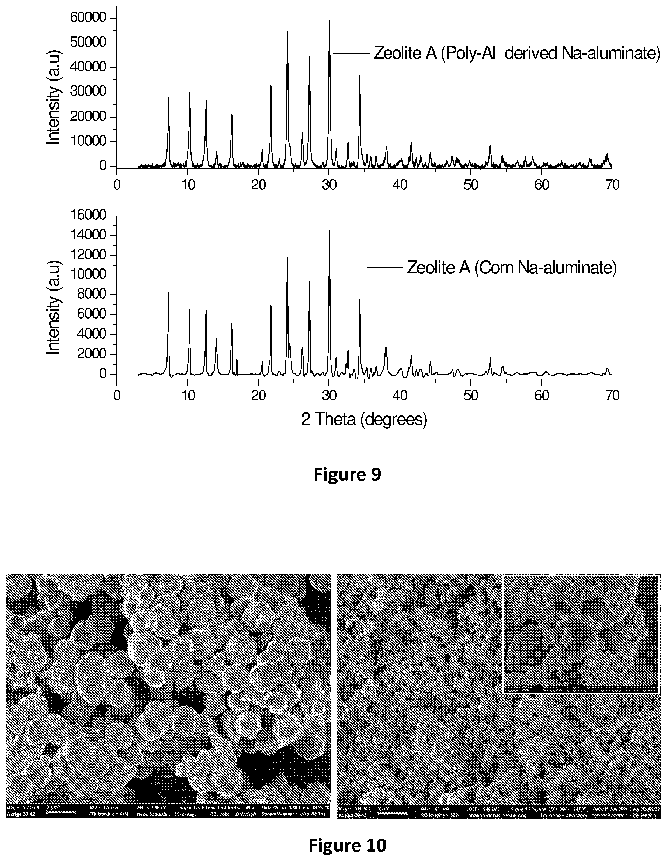

A mass ratio of 1:1.2 (fly ash to NaOH) powder was initially ground together to achieve a homogenous mixture. The resulting fly ash-NaOH powdered mixture was poured into a porcelain crucible and transferred into a muffle furnace and left to fuse for 1.5 hours at 550°C. The fused material was removed and allowed to cool to room temperature. The cooled fused material was ground to achieve a fine powder. In order to obtain single phase zeolite A crystals, a clear extract of the fused fly ash was used. In this case, a mass ratio of 1:5 (fused fly ash to water) was used to achieve a slurry that was later filtered to obtain a clear extract. In a different step, a Na-aluminate solution was prepared by mixing water, Poly-AI derived Na-aluminate powder and Na-hydroxide in a corresponding mass ratio of 20:0.6:1.2. In order to synthesize zeolite A, 50 ml of the fused fly ash extract was mixed with 20 ml Poly-Al derived Na-aluminate solution and transferred to Teflon-lined reactors and hydrothermally treated at 100°C for 2 hours. Thereafter, zeolite crystals were recovered by filtration, washed and dried at 90°C for 12 hours. The same procedure was repeated but with the use of commercially obtained Na-aluminate powder for comparison purposes. Figures 9 and 10 present the comparative XRD patterns and SEM images of zeolite A obtained using Poly-AI derived Na-aluminate and commercial Na-aluminate. The obtained zeolites are almost of the same quality.

### Example 3

### Synthesis of Al-Fum MOF from Poly-Al derived Na-sulphate

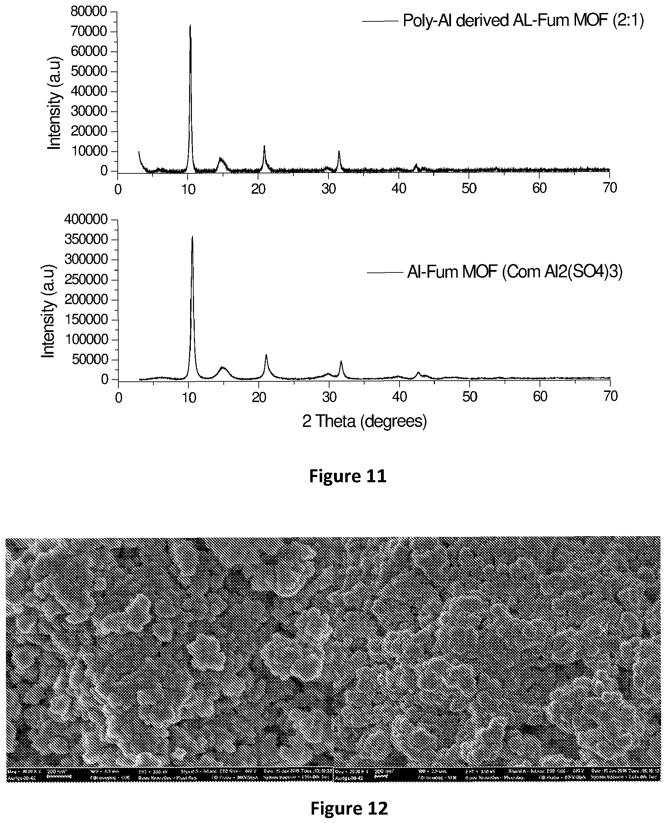

3.23 g of fumaric acid and 2.35 g of NaOH were mixed with 48 ml of deionized water and a resulting linker solution (solution A) was heated in an oil bath at 60°C for one hour. Simultaneously, a different solution containing 9.3 g Poly-Al derived aluminium sulphate was dissolved in 40 ml of water and also was heated at 60°C for one hour (solution B). Thereafter, the linker solution (solution A) was slowly added to the aluminate solution whilst stirring and the resulting mixture was further heated for an additional two hours (still at 60°C). Thereafter, a resulting white precipitate was recovered by filtration, thoroughly washed with deionized water and dried for 12 hours at 90°C. The above procedure was also repeated using commercially sourced Al₂(SO4)_{3.}18H₂0 for comparison purposes. Figures 11 and 12 present a comparison of XRD patterns and SEM images for the Al-Fumarate MOF synthesized using the Poly-Al derived Al feedstock and commercially sourced Al₂(SO4)_{3.}18H₂0. The results show that similar product had been obtained and thus proves that the Poly-Al derived Al sulphate obtained from layered packaging material can be a good feedstock for a MOF.

The thermo-chemical method of the invention provides an attractive approach for generating value-added chemicals or feedstocks from, typically used, layered packaging material that includes a metal layer or foil, such as aluminium. Advantageously, the method of the invention, as illustrated, does not require the use of a solvent or an acid to recover the metal, e.g. aluminium, of the layered packaging material.

## Claims

1. A method of recycling or processing layered packaging material, the method including
admixing a polymer-metal composite obtained from or forming part of layered packaging material with a reactant selected to react with the metal of the polymer-metal composite at elevated temperatures, wherein the polymer-metal composite is a polymer-aluminium composite and wherein the reactant is a metal salt, an ammonium salt, or a metalloid-based material, selected to react with the aluminium to form an aluminium-containing compound; and
reacting the polymer-aluminium composite with the reactant at an elevated reaction temperature in the range of about 200°C to about 800°C, either at pyrolytic conditions to subject the polymer of the polymer-aluminium composite to pyrolysis, or under combustion or incineration conditions to subject the polymer of the polymer-aluminium composite and any other non-metal layer of the layered packaging material that may be present, to combustion, to form an aluminium-containing compound and burning or driving off, at said elevated reaction temperature, the polymer of the polymer-aluminium composite and any other non-metal layer material of the layered packaging material that may be present.

2. The method according to claim 1, wherein the layered packaging material includes at least three layers, including a cellulose-based or wood pulp-based layer, a metal or metal foil layer and a layer or film of a synthetic plastics or polymeric material, the metal or metal foil layer being aluminium.

3. The method according to claim 1 or claim 2, wherein the reactant is a metal salt.

4. The method according to any of claims 1 to 3, wherein the elevated reaction temperature is in the range of about 300°C to about 700°C, or in the range of about 400°C to about 650°C.

5. The method according to any of claims 1 to 4, wherein the polymer-aluminium composite and the reactant are admixed in a ratio of from about 1:1 to about 8:1, or in the ratio of from about 2:1 to about 6:1, or in the ratio of from about 3:1 to about 5:1, on a mass basis.

6. The method according to any of claims 1 to 5, which includes withdrawing a gaseous stream driven off at the elevated reaction temperature, said gaseous stream including the polymer of the polymer-aluminium composite or one or more compounds formed at elevated temperature from the polymer of the polymer-aluminium composite, and combusting the withdrawn gaseous stream to provide heat for the reaction between the polymer-aluminium composite and the reactant at pyrolytic conditions.

7. The method according to any of claims 1 to 5, wherein the reaction is conducted under combustion or incineration conditions to subject the polymer of the polymer-aluminium composite and any other non-metal layer of the layered packaging material that may be present, to combustion.

8. The method according to claim 1, wherein the reactant is a sodium salt, the aluminium-containing compound formed at the elevated reaction temperature thus being sodium aluminate, the method including converting the sodium aluminate to aluminium sulphate.

9. The method according to claim 8, wherein the aluminium sulphate is converted to a metal organic framework (MOF) through the addition of an organic linker.

10. The method according to claim 1, wherein the reactant is a sodium salt, the aluminium-containing compound formed at the elevated reaction temperature thus being sodium aluminate, the method including converting the sodium aluminate to a zeolite by reacting the sodium aluminate with a source of silicon in a basic aqueous solution.

11. Use of layered packaging material which includes aluminium in the manufacture of a zeolite, using a process as claimed in claim 1.

12. Use of layered packaging material that includes aluminium in the manufacture of an Al-containing metal organic framework, using a process as claimed in claim 1.

## Patentansprüche

1. Verfahren zum Recyceln oder Verarbeiten von geschichtetem Verpackungsmaterial, wobei das Verfahren
das Mischen eines Polymer-Metall-Verbundstoffes, der aus geschichtetem Verpackungsmaterial erhalten wird oder einen Teil davon bildet, mit einem Reaktanten, der so gewählt wird, dass er bei erhöhten Temperaturen mit dem Metall von dem Polymer-Metall-Verbundstoff reagiert, wobei der Polymer-Metall-Verbundstoff ein Polymer-Aluminium-Verbundstoff ist und wobei der Reaktant ein Metallsalz, ein Ammoniumsalz oder ein Metalloid-basiertes Material ist, das so gewählt ist, dass es mit dem Aluminium unter Bildung einer Aluminium-enthaltenden Verbindung reagiert; und
das Umsetzen des Polymer-Aluminium-Verbundstoffes mit dem Reaktanten bei einer erhöhten Reaktionstemperatur im Bereich von etwa 200 °C bis etwa 800 °C, entweder bei pyrolytischen Bedingungen, um das Polymer des Polymer-Aluminium-Verbundstoffes Pyrolyse zu unterziehen, oder unter Verbrennungs- oder Veraschungsbedingungen, um das Polymer des Polymer-Aluminium-Verbundstoffes und eine andere nicht-metallische Schicht des geschichteten Verpackungsmaterials, die vorliegen kann, Verbrennung zu unterziehen, um eine Aluminium-enthaltende Verbindung zu bilden und das Polymer des Polymer-Aluminium-Verbundstoffes und eine andere nicht-metallische Schicht des geschichteten Verpackungsmaterials, die vorliegen kann, bei der erhöhten Reaktionstemperatur zu verbrennen oder auszutreiben.

2. Verfahren nach Anspruch 1, wobei das geschichtete Verpackungsmaterial mindestens drei Schichten umfasst, die eine Cellulose-basierte oder Holzstoff-basierte Schicht, eine Metall- oder Metallfolienschicht und eine Schicht oder ein Film aus einem synthetischen Kunststoff oder polymerem Material einschließt, wobei die Metall- oder Metallfolienschicht Aluminium ist.

3. Verfahren nach Anspruch 1 oder Anspruch 2, wobei der Reaktant ein Metallsalz ist.

4. Verfahren nach einem der Ansprüche 1 bis 3, wobei die erhöhte Reaktionstemperatur im Bereich von etwa 300 °C bis etwa 700 °C oder im Bereich von etwa 400 °C bis etwa 650 °C liegt.

5. Verfahren nach einem der Ansprüche 1 bis 4, wobei der Polymer-Aluminium-Verbundstoff und der Reaktant in einem Verhältnis von etwa 1 : 1 bis etwa 8 : 1 oder im Verhältnis von etwa 2 : 1 bis etwa 6 : 1 oder im Verhältnis von etwa 3 : 1 bis etwa 5 : 1 auf einer Massebasis gemischt werden.

6. Verfahren nach einem der Ansprüche 1 bis 5, das das Ableiten eines gasförmigen Stroms, der bei der erhöhten Reaktionstemperatur ausgetrieben wurde, wobei der gasförmige Strom das Polymer des Polymer-Aluminium-Verbundstoffes oder eine oder mehrere Verbindungen, die bei erhöhter Temperatur aus dem Polymer des Polymer-Aluminium-Verbundstoffes gebildet wurde(n), einschließt, und das Verbrennen des abgeleiteten gasförmigen Stroms, um Hitze für die Reaktion zwischen dem Polymer-Aluminium-Verbundstoff und dem Reaktanten unter pyrolytischen Bedingungen bereitzustellen, einschließt.

7. Verfahren nach einem der Ansprüche 1 bis 5, wobei die Reaktion unter Verbrennungsoder Veraschungsbedingungen erfolgt, um das Polymer des Polymer-Aluminium-Verbundstoffes und eine andere nicht-metallische Schicht des geschichteten Verpackungsmaterials, die vorliegen kann, Verbrennung zu unterziehen.

8. Verfahren nach Anspruch 1, wobei der Reaktant ein Natriumsalz ist, wobei die Aluminium-enthaltene Verbindung, die bei der erhöhten Reaktionstemperatur gebildet wurde, somit Natriumaluminat ist, wobei das Verfahren das Umwandeln des Natriumaluminats in Aluminiumsulfat einschließt.

9. Verfahren nach Anspruch 8, wobei das Aluminiumsulfat durch die Zugabe eines organischen Linkers in eine metallorganische Gerüstverbindung (MOF) umgewandelt wird.

10. Verfahren nach Anspruch 1, wobei der Reaktant ein Natriumsalz ist, wobei die Aluminium-enthaltene Verbindung, die bei der erhöhten Reaktionstemperatur gebildet wurde, somit Natriumaluminat ist, wobei das Verfahren das Umwandeln des Natriumaluminats in einen Zeolithen durch Umsetzen des Natriumaluminats mit einer Quelle für Silicium in einer basischen wässerigen Lösung einschließt.

11. Verwendung von geschichtetem Verpackungsmaterial, das Aluminium einschließt, bei der Herstellung eines Zeolithen unter Verwendung eines Verfahrens nach Anspruch 1.

12. Verwendung von geschichtetem Verpackungsmaterial, das Aluminium einschließt, bei der Herstellung einer Al-enthaltenden metallorganischen Gerüstverbindung unter Verwendung eines Verfahrens nach Anspruch 1.

## Revendications

1. Procédé de recyclage ou de traitement de matériau d'emballage en couches, le procédé comprenant les étapes consistant à
mélanger un composite polymère-métal obtenu à partir ou formant une partie d'un matériau d'emballage en couches avec un réactif choisi pour réagir avec le métal du composite polymère-métal à des températures élevées, dans lequel le composite polymère-métal est un composite polymère-aluminium et dans lequel le réactif est un sel de métal, un sel d'ammonium ou un matériau à base de métalloïde, choisi pour réagir avec l'aluminium pour former un composé contenant de l'aluminium ; et
faire réagir le composite polymère-aluminium avec le réactif à une température de réaction élevée dans la plage d'environ 200°C à environ 800°C, soit dans des conditions pyrolytiques pour soumettre le polymère du composite polymère-aluminium à une pyrolyse, soit dans des conditions de combustion ou d'incinération pour soumettre le polymère du composite polymère-aluminium et toute autre couche non métallique du matériau d'emballage en couches qui peut être présente à une combustion, pour former un composé contenant de l'aluminium et brûler ou extraire, à ladite température de réaction élevée, le polymère du composite polymère-aluminium et tout autre matériau de couche non métallique du matériau d'emballage en couches qui peut être présent.

2. Procédé selon la revendication 1, dans lequel le matériau d'emballage en couches comprend au moins trois couches, y compris une couche à base de cellulose ou à base de pâte de bois, une couche de métal ou de feuille métallique et une couche ou un film d'une matière plastique synthétique ou d'un matériau polymère, la couche de métal ou de feuille métallique étant de l'aluminium.

3. Procédé selon la revendication 1 ou la revendication 2, dans lequel le réactif est un sel de métal.

4. Procédé selon l'une quelconque des revendications 1 à 3, dans lequel la température de réaction élevée est dans la plage d'environ 300°C à environ 700°C, ou dans la plage d'environ 400°C à environ 650°C.

5. Procédé selon l'une quelconque des revendications 1 à 4, dans lequel le composite polymère-aluminium et le réactif sont mélangés à un rapport d'environ 1:1 à environ 8:1, ou à un rapport d'environ 2:1 à environ 6:1, ou à un rapport d'environ 3:1 à environ 5:1, sur une base massique.

6. Procédé selon l'une quelconque des revendications 1 à 5, qui comprend l'extraction d'un flux gazeux entraîné à la température de réaction élevée, ledit flux gazeux comprenant le polymère du composite polymère-aluminium ou un ou plusieurs composés formés à une température élevée à partir du polymère du composite polymère-aluminium, et la combustion du flux gazeux extrait pour fournir de la chaleur pour la réaction entre le composite polymère-aluminium et le réactif dans des conditions pyrolytiques.

7. Procédé selon l'une quelconque des revendications 1 à 5, dans lequel la réaction est effectuée dans des conditions de combustion ou d'incinération pour soumettre le polymère du composite polymère-aluminium, et toute autre couche non métallique du matériau d'emballage en couches qui peut être présente, à une combustion.

8. Procédé selon la revendication 1, dans lequel le réactif est un sel de sodium, le composé contenant de l'aluminium formé à la température de réaction élevée étant ainsi de l'aluminate de sodium, le procédé comprenant la conversion de l'aluminate de sodium en sulfate d'aluminium.

9. Procédé selon la revendication 8, dans lequel le sulfate d'aluminium est converti en une structure organométallique (MOF) par l'addition d'un lieur organique.

10. Procédé selon la revendication 1, dans lequel le réactif est un sel de sodium, le composé contenant de l'aluminium formé à la température de réaction élevée étant ainsi de l'aluminate de sodium, le procédé comprenant la conversion de l'aluminate de sodium en une zéolite en faisant réagir l'aluminate de sodium avec une source de silicium dans une solution aqueuse basique.

11. Utilisation de matériau d'emballage en couches qui comprend de l'aluminium dans la fabrication d'une zéolite, en utilisant un procédé selon la revendication 1.

12. Utilisation de matériau d'emballage en couches qui comprend de l'aluminium dans la fabrication d'une structure organométallique contenant de l'aluminium, en utilisant un procédé selon la revendication 1.
